# EUROPEAN PATENT SPECIFICATION

(11) **EP 4 335 744 B1**
(45) Date of publication and mention of the grant of the patent: **23.07.2025**
(21) Application number: 23196973.4
(22) Date of filing: 12.09.2023
(51) Int. Cl.: B64C 11/28, B64C 11/48, B64C 27/26, B64C 27/46, B64C 29/00, B64C 11/00, B64C 27/30

(54) **AERONAUTICAL PROPULSION DEVICE**
AERONAUTISCHE ANTRIEBSVORRICHTUNG
DISPOSITIF DE PROPULSION AÉRONAUTIQUE

(30) Priority: 12.09.2022 IT 202200018594
(43) Date of publication of application: 13.03.2024
(73) Proprietor: Phase Motion Control S.p.A., 16154 Genova (IT); Greensky S.r.l., 16121 Genova (GE) (IT)
(72) Inventor: Becchi, Paolo, 16121 Genova (GE) (IT)
(74) Representative: Bottino, Giovanni

(56) References cited:
- US-A1- 2021 253 233
- US-B1- 10 711 791
- US-B2- 10 287 010

## Description

The object of the present invention is an aeronautical propulsion device for an aircraft with aerofoils for cruise flight.

The propulsion device comprises at least two coaxial propellers, comprising a first propeller and a second propeller.

Propulsion devices of this type are known in the art.

It is also known to use intubed propellers in which the propulsion devices have sets of rotors and stators to achieve better propulsive characteristics.

This intubed propeller solution is widely used for fixed wing aircraft and VTOL aircraft and, in addition to achieving larger propeller efficiencies, also has the feature of reducing the noise emitted.

Document EP 3760536 A1 discloses a counter-rotating propulsion device in which two coaxial propellers having fixed and different pitch from each other are optimized respectively for take-off and vertical flight and for horizontal cruise flight.

During the cruise flight, the propeller with a smaller pitch, optimized for vertical flight, is stopped and the blades are feathered to minimize air resistance.

Feathered blades, however, still exert air resistance and the propulsion device disclosed in the document is quite noisy.

US10711791 B1 discloses a dual mode turbofan engine that includes a jet engine portion having a compressor, a turbine disposed aft of the compressor, and a shaft coupled to the compressor and the turbine. The jet engine portion is configured to produce an exhaust. The system further includes an auxiliary turbine having a plurality of auxiliary turbine blades. The auxiliary turbine is disposed aft of the turbine and decoupled from the shaft. The system also includes a diverter disposed between the turbine and the auxiliary turbine. The diverter is configured to selectively direct the exhaust to an inner flow path bypassing the plurality of auxiliary turbine blades or to an outer flow path engaging the plurality of turbine blades. A plurality of propeller blades is hingedly connected to the auxiliary turbine.

There is therefore a need not met by the state of the art for a propulsion device that allows the overall efficiency to be increased, the aerodynamic resistance of the blades when inactive to be decreased, and weight and noise to be decreased.

The present invention aims to achieve these objects and to overcome the drawbacks of the devices known to the state of the art with a device as disclosed at the beginning, which includes a cylindrical duct comprising a fixed part and a rotating part. Said first propeller consists of said rotating part and a plurality of blades arranged externally on said rotating part and said second propeller is intubed inside said cylindrical duct, wherein the blades of the first propeller are foldable on the outer surface of the duct. The first propeller is driven by a first electric motor and the second propeller is driven by a second electric motor.

The use of different propellers is particularly advantageous for optimizing thrust and propulsive performance in two critical flight regimes:
- "hovering" to increase the thrust for landing and take-off and stationary flight;
- cruising to obtain better propulsive performance when lift is conferred to the wings of the aircraft.

The first propeller, external to the duct, is designed for stationary flight or vertical flight, such as take-off and landing. The second propeller, inside the duct, is designed for the range of thrusts and speeds necessary for cruising, optimising its performance.

The presence of a propeller intubed in the duct and a propeller arranged radially on this duct enables there to be a concentric counter-rotating propulsion device with the thrust flows generated well separated from each other, which therefore do not generate turbulence that can adversely affect the operation of the individual propellers in a crosswise manner.

The intubed propeller solution also guarantees good performance, such as a larger diameter non-intubed propeller, and above all a considerable reduction in noise.

The outer blades in the folded position precisely approximate the aerodynamic shape of the duct and do not increase its resistance. This ensures that the efficiency during flight is higher than that of two free propellers, one of which has feathered blades.

In one exemplary embodiment, the blades of the first propeller are hinged on the rotating part of the cylindrical duct in such a way that the blades of the first propeller are arranged radially with respect to the rotation axis when the rotating part is in motion and fold on the outer surface of the duct when the rotating part is stationary.

Advantageously, therefore, when the rotating part of the cylindrical duct is rotated, the blades open in an active condition by positioning themselves radially and exerting thrust on the air; when the rotating part of the cylindrical duct is stopped in the cruise flight phase, the blades, when inactive, are closed by the aerodynamic resistance, positioning themselves along the side surface of the cylindrical duct.

According to one embodiment the first electric motor comprises an annular stator fixed on the fixed part of the duct and an annular rotor fixed on the rotating part, so as to rotate the rotating part with respect to the fixed part.

The electric motor of the first propeller is advantageously fully integrated into the cylindrical duct, greatly reducing the weights of the motorization allowing a good reduction in the overall weight.

In one exemplary embodiment, the first propeller is advantageously multi-blade, preferably comprising seven blades, producing thrusts comparable to a larger diameter two-blade propeller. By providing a large number of blades, in fact, it is possible to reduce the overall diameter of the first propeller. This means that the first propeller has a reduced diameter and consequently produces less noise.

In one embodiment, said propellers are driven in a counter-rotating manner.

One object of the present invention is also an aircraft provided with aerofoils for cruise flight, comprising at least one propulsion device as disclosed above.

In one embodiment, the aircraft is of the vertical take-off type and may be provided with means for tilting the axis of rotation of said propellers from a vertical position for take-off and vertical flight or stationary flight, to a horizontal position for cruise flight.

Once the take-off has been carried out, in which the first propeller is actuated, the tilting of the propulsion device is progressively varied from a vertical position to a horizontal position. The first propeller is then stopped and the blades close on the cylindrical duct, while the second propeller is operated. The thrust is thus now exerted solely by the second propeller intubed for cruise flight and the lift is exerted by the wings of the aircraft.

Both propellers can be operated simultaneously during take-off or vertical flight. Alternatively, the second propeller is operated only during tilting of the propulsion device or when the propulsion device has reached the horizontal position.

These and other features and advantages of the present invention will become clearer from the following disclosure of some non-limiting examples illustrated in the accompanying drawings, wherein:
Fig. 1 shows an embodiment of the device that is the object of the present invention, with the blades of the first propeller in an active condition;
Fig. 2 shows a front view with the blades of the first propeller in an inactive condition;
Fig. 3 shows a rear view with the blades of the first propeller in an inactive condition;
Fig. 4 shows a sectional view.

A preferred example of an aeronautical propulsion device according to the present invention is shown in the figures. The propulsion device is applied in an aircraft provided with aerofoils for cruise flight, in particular an EVTOL, i.e. an electrically powered vertical take-off and landing aircraft.

The propulsion device comprises a first propeller 1 and a second propeller 2, positioned coaxially and independently rotatable with respect to each other.

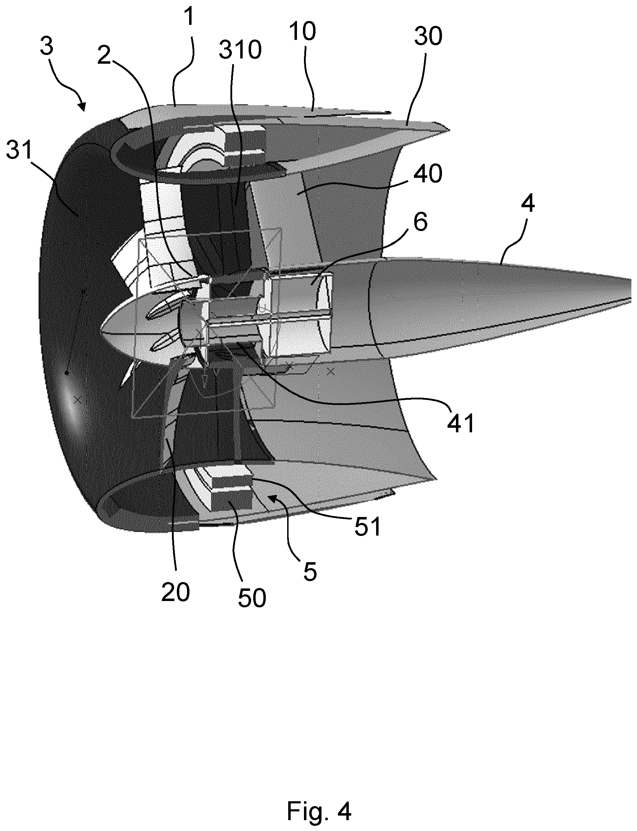

The first propeller 1 is driven by a first electric motor 5 and the second propeller 2 is driven by a second electric motor 6, as can be seen in Figure 4 and described in detail below.

The motors 5 and 6 respectively drive the first and second propellers 1 and 2 so that the latter are, preferably but not exclusively, counter-rotating with respect to each other.

The aircraft is also provided with means for tilting the axis of rotation of the propellers 1 and 2, in particular the entire propulsion device, from a vertical position for take-off and vertical or stationary flight to a horizontal position for cruise flight. It is possible to rotate only the propulsion device or to constrain the propulsion device to the wings, or to a part of them, and rotate the entire wings, or that part of them. It is also possible to provide a tail-sitter aircraft, in which the entire aircraft changes inclination between take-off or landing phase and cruising phase.

The propulsion device comprises a cylindrical duct 3 in which the second propeller 2 is comprised, which is therefore an intubed propeller.

The cylindrical duct 3 preferably has an aerodynamic profile, with a leading edge rounded in the forward direction of the propulsion device, and an inner diameter that progressively decreases and then increases again towards the rear end. However, other intubed propeller geometries can be provided.

The cylindrical duct 3 comprises a fixed part 30 and a rotating part 31, the rotating part 31 being rotatably coupled to the fixed part 30 and rotatably driven by the first motor 5 with respect to said fixed part 30. The rotating part 31 is positioned in front of the fixed part 30. However, it is possible to alternatively provide a rotating part positioned externally with respect to the fixed part.

The first propeller 1 consists of the rotating part 31 and of a plurality of blades 10 arranged externally on the rotating part 31. There are preferably seven blades 10.

The blades 10 of the first propeller 1 are foldable on the outer surface of the duct 3. In the example of the figures, the seven blades 10 of the first propeller 1 are hinged on the rotating part 31 of the cylindrical duct 3.

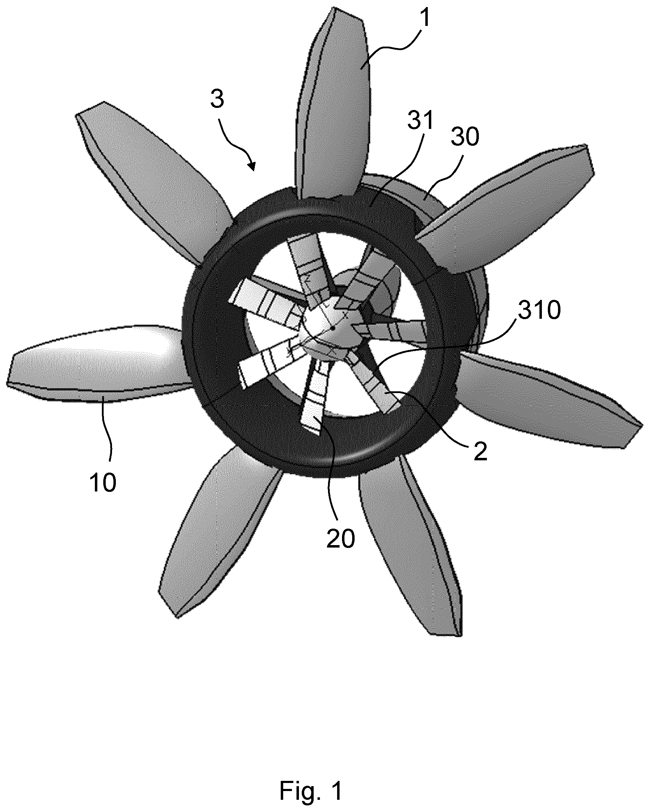

As illustrated in Figure 1, when the rotating part 31 is rotated with respect to the fixed part 30 by the first motor 5, each blade 10 of the first propeller 1 rotates about its own coupling hinge to the rotating part 31. The blades 10 are thus arranged radially with respect to the axis of rotation, placing themselves in an active condition. In this active condition, the first propeller 1 exerts a propulsion. This is the case for take-off or landing, or vertical or stationary flight.

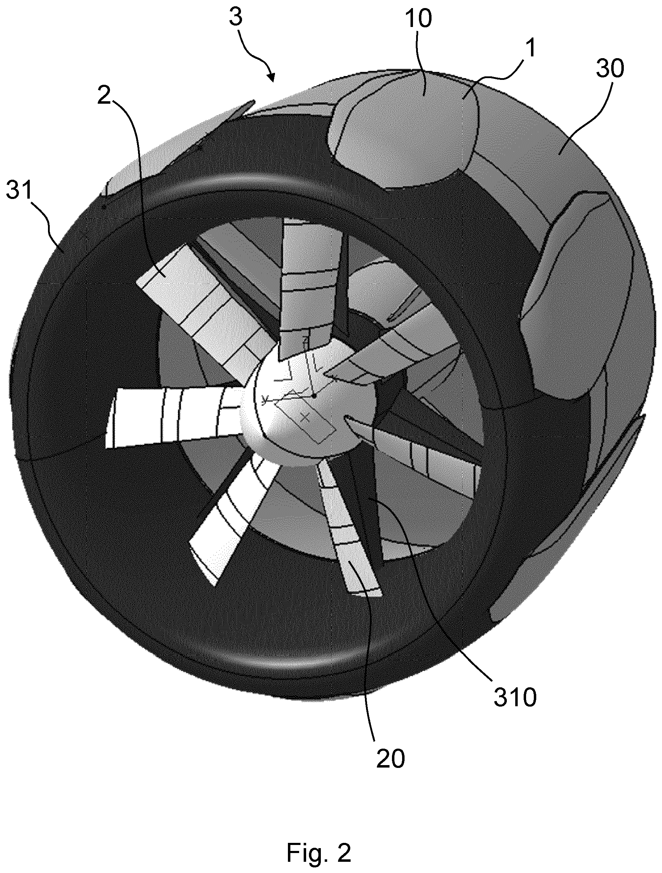

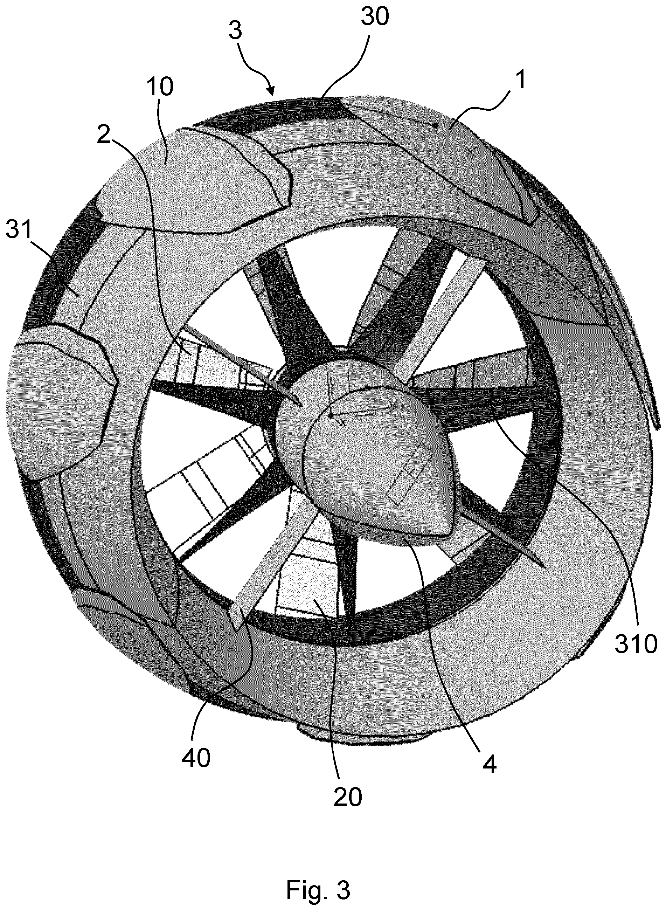

As shown in Figures 2 and 3, when the rotating part 31 is stopped with respect to the fixed part 30, the blades 10 rotate on the hinges for coupling to the rotating part 31 and fold onto the outer surface of the duct 3. This is the case in the cruise flight phase, where lift is provided by the wings of the aircraft.

A system may be provided for locking the rotating part 31, which is alternatively held stationary by the non-powered motor 5.

At take-off, the entire rotating part 31 of the duct 3 rotates and the blades 10 of the first propeller 1, constrained to the rotating part 31, open providing the necessary thrust for vertical flight. For cruising flight the rotating part 31 stops rotating and the blades 10 of the first propeller 1 fold over the outer profile of the duct pushed by the aerodynamic air resistance. Alternatively, it is possible to provide active means for moving the blades 10 from the active condition to the inactive condition and vice versa.

The second propeller 2 is intubed inside the duct 3 and, by means of the drive of the second motor 6 rotating preferably in the opposite direction to the first motor 5, produces the necessary thrust during the cruising phase. The second propeller 2 can also be active during take-off and can be designed to generate the thrust necessary for vertical take-off in the event of failure of the first propeller 1 and/or the first motor 5. The second propeller 2 has a plurality of blades 20, e.g., two or more, in particular seven.

During the cruise flight, the first propeller 1 is stopped and only the second intubed propeller 2 is operated.

It is possible to operate only the first propeller 1 during take-off and landing, or to operate the first propeller 1 and the second propeller 2 simultaneously.

Similarly, in an emergency it is possible to operate only the second propeller 2 during take-off and landing.

In this case, the power of the second motor 6 and the sizing of the second propeller 2 must allow the necessary thrust to be delivered for take-off and landing.

As can be seen in Figure 3, the second propeller 2 is driven by the second motor 6 housed in the hub 4, which hub 4 is connected to the fixed part 31 of the duct 3, in a central position to the duct 3 itself, by means of four radially arranged spokes 40.

Figure 4 illustrates a sectional view of the device, with the blades 10 of the first propeller 1 placed in an inactive condition and folded over the duct 3.

The first electric motor 5 comprises an annular stator 50 fixed on the fixed part 30 of the duct 3 and an annular rotor 51 fixed on the rotating part 31. Activation of the first motor 5 rotates the rotating part 31 with respect to the fixed part 30 and then drives the first propeller 1.

As can be seen in Figure 4, the first motor 5 is fully integrated into the wall of the cylindrical duct 3.

In the example of the figures, the rotating part 31 is rotatably coupled to the fixed part 30 by means of a stator stage 310 for coupling to the hub 4.

The stator stage 310 is pivotably fixed on the hub 4 by means of bearings, not shown in the figure, in an intermediate tubular portion 41 of the hub 4. The first motor 5 can also be positioned on the hub, near said tubular part 41. However, the positioning of the first motor 5 in the thickness of the walls of the duct 3 allows a large diameter of the first motor 5 to be obtained, allowing sections of the stator 50 and the rotor 51 to be reduced, with a decrease in weight and overall size.

The second motor 6 is placed behind this tubular part 41, whereas the second propeller 2 is placed in front, the second propeller 2 being driven by the second motor 6 by means of a drive shaft passing through said tubular part 41.

The stator stage 310 is provided with blades inclined opposite to the blades 20 of the second propeller 2, to straighten the rotating air flow generated by the second propeller 2.

The combination of thrust from the second propeller 2, the residual thrust of the stator stage 310 and the pressure variation due to the profile of the duct 3 generates the propulsion of the intubed propeller.

During the rotation of the first propeller 1 and the rotating part 31, the stator stage 310 contributes to the thrust by acting as a further propeller. The large diameter of the first propeller 1 allows low-speed rotations. In this way, even during rotation, the stator stage 310 acts as a stator. When the first propeller 1 and the rotating part 31 are stopped, the stator stage 310 contributes to the thrust only as a flow rectifier.

The propulsion device may be connected to the aircraft by the fixed part 30 of the duct 3 and/or by the hub 4.

## Claims

1. Aeronautical propulsion device for an aircraft provided with aerofoils for cruise flight, the propulsion device comprising at least two propellers (1, 2) coaxial to one another, comprising a first propeller (1) and a second propeller (2), wherein the aeronautical propulsion device includes a cylindrical duct (3) comprising a fixed part (30) and a rotating part (31), wherein said first propeller (1) consists of said rotating part (31) and a plurality of blades (10) arranged externally on said rotating part (30) and said second propeller (2) is intubed inside said cylindrical duct (3), wherein the blades (10) of the first propeller (1) are foldable on the outer surface of the duct (3),
**characterized in that** the first propeller (1) is driven by a first electric motor (5) and the second propeller (2) is driven by a second electric motor (6).

2. Device according to Claim 1, wherein the blades (10) of the first propeller (1) are hinged on the rotating part (31) of the cylindrical duct (3) in such a way that the blades (10) of the first propeller (1) are arranged radially with respect to the axis of rotation when the rotating part (31) is moving, and fold back on the outer surface of the duct (3) when the rotating part (31) is stationary.

3. Device according to one or more of the preceding claims, wherein the first electric motor (5) comprises an annular stator (50) fixed on the fixed part (30) of the duct (3) and an annular rotor (51) fixed on the rotating part (31), so as to rotate the rotating part (31) with respect to the fixed part (30).

4. Device according to one or more of the preceding claims, wherein the first propeller (1) comprises three or more blades (10), in particular seven blades (10).

5. Device according to one or more of the preceding claims, wherein said propellers are driven in a counter-rotating manner.

6. Aircraft with aerofoils for cruise flight,
**characterized in that**
it comprises at least one propulsion device according to one or more of the preceding claims.

7. Aircraft according to Claim 6, wherein the aircraft is of the vertical take-off type and is provided with means for tilting the axis of rotation of said propellers (1, 2) from a vertical position for take-off and vertical or stationary flight to a horizontal position for cruise flight.

## Patentansprüche

1. Luftfahrt-Antriebsvorrichtung für ein mit Tragflächen für den Reiseflug bereitgestelltes Flugzeug, wobei die Antriebsvorrichtung mindestens zwei zueinander koaxiale Propeller (1, 2) umfasst, die einen ersten Propeller (1) und einen zweiten Propeller (2) umfassen,
wobei die Luftfahrt-Antriebsvorrichtung einen zylindrischen Kanal (3) einschließt, der einen feststehenden Teil (30) und einen rotierenden Teil (31) umfasst, wobei der erste Propeller (1) aus dem rotierenden Teil (31) und einer Vielzahl von Flügeln (10) besteht, die außen an dem rotierenden Teil (30) angeordnet sind, und der zweite Propeller (2) innerhalb des zylindrischen Kanals (3) intubiert ist, wobei die Flügel (10) des ersten Propellers (1) an der Außenfläche des Kanals (3) klappbar sind,
**dadurch gekennzeichnet, dass** der erste Propeller (1) von einem ersten Elektromotor (5) angetrieben wird und der zweite Propeller (2) von einem zweiten Elektromotor (6) angetrieben wird.

2. Vorrichtung nach Anspruch 1, wobei die Flügel (10) des ersten Propellers (1) an dem rotierenden Teil (31) des zylindrischen Kanals (3) derart angelenkt sind, dass die Flügel (10) des ersten Propellers (1) radial zu der Rotationsachse angeordnet sind, wenn sich der rotierende Teil (31) bewegt, und an der Außenfläche des Kanals (3) zurückklappen, wenn der rotierende Teil (31) stillsteht.

3. Vorrichtung nach einem oder mehreren der vorstehenden Ansprüche, wobei der erste Elektromotor (5) einen ringförmigen Stator (50) umfasst, der an dem feststehenden Teil (30) des Kanals (3) befestigt ist, und einen ringförmigen Rotor (51), der an dem rotierenden Teil (31) befestigt ist, um den rotierenden Teil (31) in Bezug auf den feststehenden Teil (30) zu drehen.

4. Vorrichtung nach einem oder mehreren der vorstehenden Ansprüche, wobei der erste Propeller (1) drei oder mehr Flügel (10), insbesondere sieben Flügel (10), umfasst.

5. Vorrichtung nach einem oder mehreren der vorstehenden Ansprüche, wobei die Propeller gegenläufig angetrieben sind.

6. Flugzeug mit Tragflächen für den Reiseflug,
**dadurch gekennzeichnet, dass**
es mindestens eine Antriebsvorrichtung nach einem oder mehreren der vorstehenden Ansprüche umfasst.

7. Flugzeug nach Anspruch 6, wobei das Flugzeug von dem Typ eines Senkrechtstarters ist und mit Mitteln zum Kippen der Rotationsachse der Propeller (1, 2) aus einer vertikalen Position für den Start und den vertikalen oder stationären Flug in eine horizontale Position für den Reiseflug bereitgestellt ist.

## Revendications

1. Dispositif de propulsion aéronautique pour un aéronef équipé de surfaces portantes pour les vols de croisière, le dispositif de propulsion comprenant au moins deux hélices (1, 2) coaxiales l'une par rapport à l'autre, comprenant une première hélice (1) et une seconde hélice (2),
dans lequel le dispositif de propulsion aéronautique comprend un conduit cylindrique (3) comprenant une partie fixe (30) et une partie rotative (31), dans lequel ladite première hélice (1) consiste en ladite partie rotative (31) et une pluralité de pales (10) disposées à l'extérieur sur ladite partie rotative (30) et ladite seconde hélice (2) est intubée à l'intérieur dudit conduit cylindrique (3), dans lequel les pales (10) de la première hélice (1) sont pliables sur la surface extérieure du conduit (3),
**caractérisé en ce que** la première hélice (1) est entraînée par un premier moteur électrique (5) et la seconde hélice (2) est entraînée par un second moteur électrique (6).

2. Dispositif selon la revendication 1, dans lequel les pales (10) de la première hélice (1) sont articulées sur la partie rotative (31) du conduit cylindrique (3) de telle sorte que les pales (10) de la première hélice (1) sont disposées radialement par rapport à l'axe de rotation lorsque la partie rotative (31) se déplace, et se replient sur la surface extérieure du conduit (3) lorsque la partie rotative (31) est stationnaire.

3. Dispositif selon l'une ou plusieurs des revendications précédentes, dans lequel le premier moteur électrique (5) comprend un stator annulaire (50) fixé sur la partie fixe (30) du conduit (3) et un rotor annulaire (51) fixé sur la partie rotative (31), de manière à faire tourner la partie rotative (31) par rapport à la partie fixe (30).

4. Dispositif selon l'une ou plusieurs des revendications précédentes, dans lequel la première hélice (1) comprend trois pales ou plus (10), en particulier sept pales (10).

5. Dispositif selon l'une ou plusieurs des revendications précédentes, dans lequel lesdites hélices sont entraînées de manière inverse.

6. Aéronef avec surfaces portantes pour les vols de croisière,
**caractérisé en ce qu'**
il comprend au moins un dispositif de propulsion selon l'une ou plusieurs des revendications précédentes.

7. Aéronef selon la revendication 6, dans lequel l'aéronef est du type à décollage vertical et est pourvu de moyens pour incliner l'axe de rotation desdites hélices (1, 2) d'une position verticale pour le décollage et le vol vertical ou stationnaire à une position horizontale pour les vols de croisière.
